# EUROPEAN PATENT APPLICATION

(11) **EP 1 983 215 A1**
(43) Date of publication of application: **22.10.2008**
(21) Application number: 07106625.2
(22) Date of filing: 20.04.2007
(51) Int. Cl.: F16F 15/26, F16F 15/28

(54) **Reciprocating piston machine and internal combustion engine**

(71) Applicant: Gomecsys B.V., 1411 AR Naarden (NL)
(72) Inventor: De Gooijer, Lambertus, Hendrik, 1412 ND, Naarden (NL)
(74) Representative: Metman, Karel Johannes

(57) **Abstract**

A reciprocating piston machine (1) comprises a crankcase (2), a crankshaft (3), at least a piston (4) and a balancing system (6) for balancing at least reciprocating forces of the first order which act on the crankshaft (3) in the direction of movement of the piston (4) when the machine (1) is operated. The balancing system (6) comprises at least a counterweight (14) which is provided on the crankshaft (3). The counterweight (14) is positioned and adapted such that it compensates the reciprocating forces of the first order by substantially 50%. The balancing system (6) further comprises at least a drivable eccenter weight (15) which is rotatably connected to the crankcase (2) and positioned and adapted such that the resultant centrifugal force thereof is directed in a direction opposite to that of the counterweight (14) and is driven at similar speed as the crankshaft (3) albeit in opposite direction around an eccenter weight axis extending parallel to the crankshaft axis (8) when the machine (1) is operated. The weight and centre of gravity of the eccenter weight (15) is selected such that the resultant centrifugal force thereof is substantially equal to that of the counterweight (14).

## Description

The present invention relates to a reciprocating piston machine according to the preamble of claim 1.

Such a machine is known in the art. A publication in the German Motortechnische Zeitschrift MTZ 0312007, Jahrgang 68 discloses a single cylinder internal combustion engine, which is provided with a balancing system for reducing vibration of the engine resulting from reciprocating movement of the piston within the engine. In order to reduce the reciprocating forces of the first order which typically act on the crankshaft in the direction of movement of the piston, counterweights fixed to the crankshaft have such a mass that the centrifugal force of the counterweights have a component along the axis of movement of the piston of 50% of the acceleration and deceleration forces of the reciprocating mass within the cylinder.

Furthermore, the prior art engine is provided with balancing gear wheels having an excentrically disposed centre of gravity, which wheels are positioned at both sides of the piston in axial direction of the crankshaft. A disadvantage of the known balancing system is that it represents a compromise between forces in the direction of movement of the piston and perpendicular thereto, which still results in vibration of the engine.

The present invention aims to provide a reciprocating piston machine of which the vibrations due to the reciprocating forces are minimized.

For this purpose the weight and centre of gravity of the eccenter weight is selected such that the resultant centrifugal force of the eccenter weight is substantially equal to that of the counterweight when the machine is operated.

The advantage of this feature is that the reciprocating forces of the first order of the machine are entirely balanced in the direction of movement of the piston without resulting in a force component in radial direction of the crankshaft axis perpendicular to the direction of movement of the piston. Due to the fact that the counterweight on the crankshaft balances the reciprocating forces of the first order by substantially 50% a resultant force acts on the crankshaft. This resultant force is about 50% of the maximum reciprocating force in top dead centre and bottom dead centre of the piston. Since the reciprocating force is only directed in the direction of movement of the piston the centrifugal force of the counterweight also causes a force component on the crankshaft in a direction perpendicular to the direction of movement of the piston. As a consequence, the resultant centrifugal force constituted of the reciprocating force and the centrifugal force of the counterweight rotates at similar speed as the crankshaft but in a direction opposite thereto, whereas the resultant centrifugal force amounts to about 50% of the maximum reciprocating force. It is noted that the counterweight described above may be combined with another counterweight which is generally applied for balancing centrifugal forces of rotating parts of the reciprocating machine.

It is noted that in the case of mentioning herein that the reciprocating forces of the first order act on the crankshaft in the direction of movement of the piston, it means that the forces only act along a line parallel to the direction of movement of the piston. For example, if the piston moves from just before top dead center to just after top dead center the reciprocating force will have the same direction, but the direction of movement of the piston changes.

In an advantageous embodiment the eccenter weight axis coincides with the crankshaft axis. This means that the resultant force of the eccenter weight acts along a virtual line through the crankshaft axis. This improves the balancing properties of the machine further.

The balancing system may comprise at least two eccenter weights having axes of rotation extending parallel to the crankshaft axis, which axes are positioned at angular distance with respect to each other about the crankshaft axis, and the weights and centres of gravity of the eccenter weights are selected such that the resultant force of the eccenter weights forms the resultant centrifugal force rotating about the eccenter weight axis. In this practical embodiment a relatively simple way of creating a resultant centrifugal force is obtained by driving at least two eccenter weights. It is, for example, possible to apply two identical eccenter weights having axes of rotation extending parallel to and within one plane with the crankshaft axis. This plane may be parallel to the direction of movement of the piston.

In a preferred embodiment at least two eccenter weights are disposed near each end portion of the crankshaft in axial direction thereof. The advantage of this configuration is that the forces generated by the eccenter weights can be evenly distributed over the machine in the axial direction of the crankshaft. Furthermore, when the eccenter weights near both end portions of the crankshaft are not connected to each other by a shaft, but are separately mounted on the crankcase, the machine can be built in a compact way, because the eccenter weights can be disposed at locations which would be impossible in the case of a shaft between two opposite eccenter weights, for example when the eccenter weights are located next to the cylinders as seen parallel to the crankshaft axis.

The axes of rotation of the eccenter weights may be equidistantly distributed in circumferential direction of the crankshaft axis. In this case the weight and centre of gravity of the eccenter weights may be identical in order to create a constant resultant centrifugal force.

In an advantageous embodiment the eccenter weights are first order gears which mesh with a central gear fixed to the crankshaft. This provides a robust drive means of the eccenter weights.

The balancing system may comprise at least two balancing members for balancing reciprocating forces of the second order, which balancing members are rotatably connected to the crankcase and drivable such that they rotate in opposite direction with respect to each other at twice the crankshaft speed when the machine is operated. Reciprocating forces of the second order typically act on the crankshaft in the direction of movement of the piston at a frequency which is twice the crankshaft speed.

Each balancing member may be formed by at least two second order eccenter weights, one disposed near one end portion of the crankshaft and the other one near the opposite end portion thereof. The advantage of this configuration is that the second order eccenter weights can be disposed at locations which would be impossible in the case of a shaft between two eccenter weights disposed near both end positions of the crankshaft in axial direction thereof, for example next to the cylinders as seen parallel to the crankshaft axis.

The second order eccenter weights may be second order gears, of which at least near one end portion of the crankshaft one second order gear meshes with the central gear and the other second order gear meshes with one of the first order gears. This embodiment causes the second order eccenter weights at each of the end portions of the crankshaft to rotate in opposite direction with respect to each other.

In a preferred embodiment the balancing members are positioned such that a virtual plane through their axes of rotation is at least substantially perpendicular to the direction of movement of the piston, because this minimizes any varying moment about a line extending parallel to the crankshaft axis, which might result from the balancing members if positioned otherwise.

The machine may be provided with a crank member which is eccentrically disposed with respect to the crankpin and has an outer circumferential wall which bears a big end of the connecting rod such that the connecting rod is rotatably mounted on the crank member via the big end, wherein a gear is mounted to the crank member and an internal ring gear is mounted to the crankcase with which the gear meshes. Particularly, in the case of eccenter weights which are disposed near the end portions of the crankshaft in axial direction thereof, the machine can be constructed in a compact way, because the eccenter weights can be disposed at locations which would be impossible in the case of a shaft between two opposite eccenter weights, for example next to the cylinders as seen parallel to the crankshaft axis. It is noted that the reciprocating piston mechanism including the crank member is described in the European patent application having application number 07102584.4 of the same applicant as the current application. Therefore, the mentioned application is incorporated herein by reference thereto.

In a preferred embodiment at least two pistons are connected to the crank member, because this results in a compact machine.

In an alternative embodiment the crankshaft comprises at least two crankpins which are disposed at opposite sides of the crankshaft axis. This may result in a relatively compact four-cylinder machine.

In another alternative embodiment the crankshaft may be provided with at least two crankpins disposed at opposite sides of the crankshaft axis, wherein the balancing system comprises at least two eccenter weights, each of them positioned nearby an end portion of the crankshaft in axial direction thereof. In this case a compact four-cylinder machine may be obtained, of which at least the reciprocating forces of the first order are entirely balanced such that in all radial directions with respect to the crankshaft axis resultant forces are substantially negligible.

The eccenter weights of this alternative embodiment may be mounted on a shaft which is rotatably connected to the crankcase and has an axis of rotation parallel to the crankshaft axis. This is relatively simple to manufacture.

Another alternative reciprocating piston machine comprises a crankcase; a crankshaft rotatable about a crankshaft axis and connected to the crankcase, wherein the crankshaft includes at least two crankpins disposed at opposite sides of the crankshaft axis; at least two pistons, wherein each of the crankpins is connected to at least one of the pistons via a connecting rod; and a balancing system for balancing at least reciprocating forces of the first order which act on the crankshaft in the direction of movement of the piston when the machine is operated, wherein the balancing system comprises at least two counterweights provided on the crankshaft at locations which are spaced from each other in axial direction of the crankshaft, wherein the counterweights are positioned and adapted such that they compensate the reciprocating forces of the first order related to each of the pistons by substantially 50%, hence generating a resultant torque about a virtual line through the crankshaft axis which virtual line extends substantially perpendicular to a plane through the crankshaft axis and center lines of the crankpins, which virtual line rotates about the crankshaft axis at the same speed as the crankshaft albeit it in opposite direction thereof, wherein the balancing system further comprises at least two drivable eccenter weights which are rotatably connected to the crankcase and spaced from each other in axial direction of the crankshaft, and said eccenter weights are driven at similar speed as the crankshaft albeit in opposite direction thereof around corresponding eccenter weight axes extending parallel to the crankshaft axis when the machine is operated, wherein the weights and centres of gravity of the eccenter weights are selected such that resultant centrifugal forces of the eccenter weights generate a torque about said virtual line, which torque is substantially equal to the resultant torque albeit in opposite direction thereof when the machine is operated.

In the case of two crankpins which are disposed at opposite sides of the crankshaft axis the reciprocating forces of the first order related to the movement of the pistons are naturally compensated in the direction of movement of the pistons, since the pistons associated with each of the crankpins move in opposite directions synchronously. However, the reciprocating forces result in a torque, which is compensated in the machine according to the invention. Due to the compensation of substantially 50% of the reciprocating forces by the counterweights, the resultant torque is a rotating torque which has a substantially continuous value. This resultant torque is compensated by the at least two eccenter weights.

In a practical embodiment at least one of the eccenter weights is located near one end portion of the crankshaft in axial direction thereof and at least the other one is located near the opposite end portion thereof, and the centres of gravity of said eccenter weights are orientated such that resultant forces thereof are directed from bottom dead center to top dead center when the piston corresponding to the crankpin which is adjacent to the eccenter weight in question is in bottom dead center.

The invention also relates to an internal combustion engine comprising the reciprocating piston machine.

The invention will hereafter be elucidated with reference to the drawings showing embodiments of the invention by way of example.
Fig. 1 is a schematic perspective cut-away view of an internal combustion engine which comprises an embodiment of a reciprocating piston machine according to the invention.
Fig. 2 is a perspective view of a part of the embodiment of Fig. 1, illustrating a condition wherein the pistons are in bottom dead centre.
Fig. 3 is a schematic rear view of the embodiment of Fig. 1.
Fig. 4 is a schematic frontal view of the embodiment of Fig. 2.
Fig. 5 is a schematic perspective view of an internal combustion engine which comprises an alternative embodiment of a reciprocating piston machine according to the invention.
Fig. 6 is a view similar to Fig. 5, but showing still an alternative embodiment.
Fig. 7 is a view similar to Fig. 5, but showing still another alternative embodiment.
Fig. 8 is a schematic frontal view of the embodiment of Fig. 7.

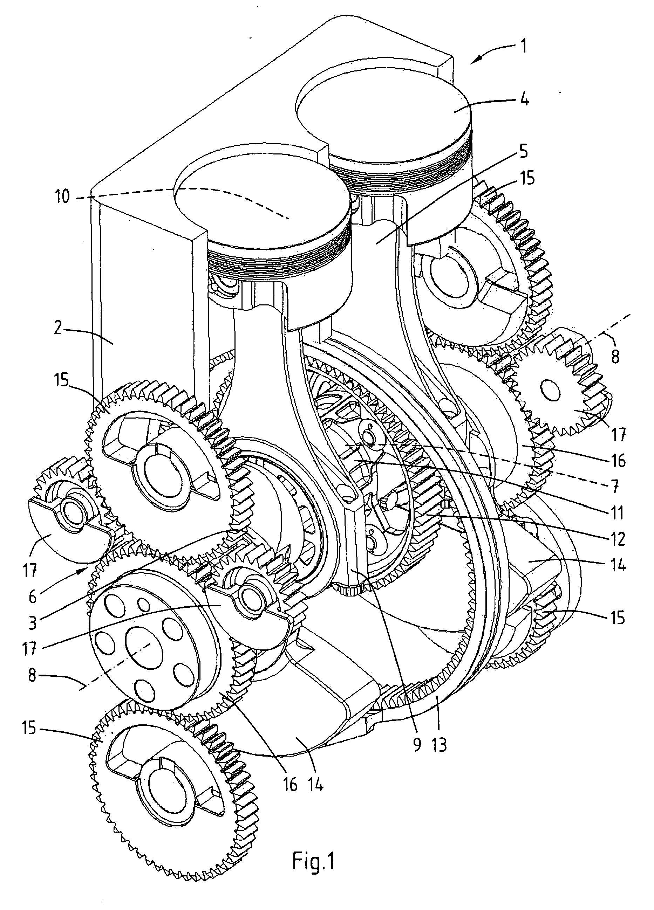

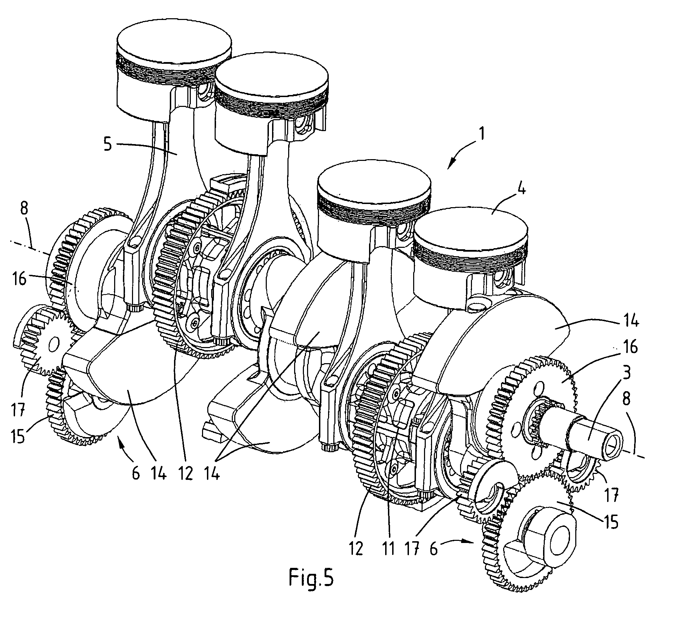

Fig. 1-4 show a four-stroke, two-cylinder, in-line internal combustion engine, which comprises an embodiment of a reciprocating piston machine 1 according to the invention. Fig. 5-8 show a four-stroke, four-cylinder, in-line internal combustion engine, illustrating several alternative embodiments of the reciprocating piston machine 1 according to the invention.

The reciprocating piston machine 1 of the embodiment of Fig. 1 comprises a crankcase 2, a crankshaft 3, two pistons 4, two connecting rods 5 and a balancing system 6. The crankshaft 3 has a crankpin 7 (not visible in the figures) and is rotatable about a crankshaft axis 8. Both pistons 4 are connected to the crankpin 7 via the corresponding connecting rods 5. Each of the connecting rods 5 has a big end 9 and a small end 10. Each of the pistons 4 is rotatably connected to the small end 10 of the corresponding connecting rod 5. Furthermore, the machine 1 is provided with a crank member 11 which is eccentrically disposed with respect to the crankpin 7 and has two outer circumferential walls at the axial ends of the crank member 11, which circumferential walls bear the big ends 9 of the connecting rods 5. This means that each of the connecting rods 5 is rotatably mounted on the crank member 11 via the big end 9.

The crank member 11 is provided with a gear 12. An internal ring gear 13 is mounted to the crankcase 2. The gear 12 meshes with the internal ring gear 13. The internal ring gear 13 is concentrically located with respect to the crankshaft axis 8. The gear 12 and the internal ring gear 13 cause the crank member 11 to rotate with respect to the crank pin 7 upon rotation of the crankshaft 3. Furthermore, it is possible that the internal ring gear 13 is turnable around the crankshaft axis 8 so as to achieve advantageous effects of the movement of the pistons 4 with respect to the crankcase 2. These effects are described in detail in EP 1 080 320 B1.

On the one hand, the balancing system 6 serves to balance the centrifugal forces of rotating parts of the machine 1, comprising the crankshaft 3 and a portion of the connecting rods 5 adjacent to the big ends 9 thereof, and on the other hand, the balancing system 6 serves to balance the reciprocating forces of reciprocating parts of the machine 1, comprising the pistons 4 and a portion of the connecting rods 5 adjacent to the small ends 10 thereof.

The centrifugal forces of the rotating parts of the machine 1 are entirely balanced by counterweights 14. The reciprocating forces due to reciprocating parts of the machine 1 comprise reciprocating forces of the first order which act on the crankshaft 3 in the direction of movement of the pistons 4 at a frequency which is equal to the rotational speed of the crankshaft 3 when the machine is operated, and reciprocating forces of the second order which also act on the crankshaft 3 in the direction of movement of the pistons 4, but at a frequency which equals twice the rotational speed of the crankshaft 3. Since both the reciprocating forces of the first and second order act in the direction of movement of the pistons 4, these cannot be simply balanced by a counterweight mounted on the crankshaft 3 only.

Regarding the reciprocating forces of the first order, in the embodiment such as shown in Fig. 1-4 these forces are compensated by substantially 50% by the counterweights 14 of the balancing system 6. This means that the counterweights 14 compensate both the centrifugal forces of the rotating parts of the machine 1 and substantially 50% of the reciprocating forces of the first order of the machine 1. However, the reciprocating forces of the first order are only directed in the direction of movement of the pistons 4, which means that the centrifugal forces of the portions of the counterweights 14 compensating the reciprocating forces of the first order also cause a force component on the crankshaft 3 in a direction perpendicular to the direction of movement of the pistons 4. As a result, the resultant force constituted of the reciprocating forces and the centrifugal forces rotates at similar rotational speed about the crankshaft axis 8 as the crankshaft 3, but in a direction opposite thereof, whereas this resultant centrifugal force amounts to about 50% of the maximum of the reciprocating forces of the first order. The rotating resultant centrifugal force acts on the crankcase 2 and will cause vibrations of the crankcase 2 if not compensated.

In the embodiment shown in Fig. 1-4 the rotating resultant centrifugal force is compensated by four drivable eccenter weights in the form of first order gears 15 having axes of rotation extending parallel to the crankshaft axis 8. Near each end portion of the crankshaft 3 in axial direction thereof two first order gears 15 are disposed. In this case the first order gears 15 are mounted on the outer side of the crankcase 2, but it is also possible to locate these at the inner side thereof. The axes of rotation of the first order gears 15 at both sides of the machine 1 are equidistantly distributed in circumferential direction of the crankshaft axis 8. The first order gears 15 are rotatably mounted to the crankcase 2 and mesh with a central gear 16 which is fixed to the crankshaft 3. The first order gears 15 will be driven by the crankshaft 3 via the central gear 16 in opposite rotational direction of the crankshaft 3. Since the first order gears 15 and the central gear 16 have similar diameters they rotate at similar speed. The centres of gravity of both first order gears 15 are positioned such that they lie in a virtual substantially flat plane through the centre line of the pistons 4.

Fig. 1 illustrates that the centres of gravity of the first order gears 15 are directed downwards when the pistons 4 are in top dead centre. The weights of all four first order gears 15 are selected such that the resultant force of the first order gears 15 compensates the rotating force having an amplitude which is substantially equal to that of the portions of the counterweights 14 compensating the reciprocating forces of the first order. In the embodiment shown the resultant centrifugal force resulting from the four first order gears 15 rotates about a virtual eccenter weight axis. In this case the eccenter weight axis coincides with the crankshaft axis 8. This means that the reciprocating forces of the first order are fully balanced in this embodiment of the machine 1.

It is noted that the machine 1 may also be provided with more than two first order gears 15 near each end of the crankshaft 3 in axial direction thereof.

The balancing system 6 also comprises two balancing members for balancing the reciprocating forces of the second order. In the embodiment shown in Fig. 1 each balancing member is formed by two second order eccenter weights in the form of second order gears 17, one disposed near one end portion of the crankshaft 3 and the other one near the opposite end portion thereof. Hence, the embodiment comprises four second order gears 17 in total. The second order gears 17 at each side of the machine 1 are rotatably connected to the crankcase 2 and drivable in opposite direction with respect to each other at twice the crankshaft speed when the machine 1 is operated. Near one end portion of the crankshaft 3 one second order gear 17 meshes with the central gear 16 and the other second order gear 17 meshes with one of the first order gears 15. The second order gears 17 are positioned such that a virtual plane through their axes of rotation is nearby perpendicular or perpendicular to the direction of movement of the piston 4. This minimizes any moment about a line extending parallel to the crankshaft axis 8.

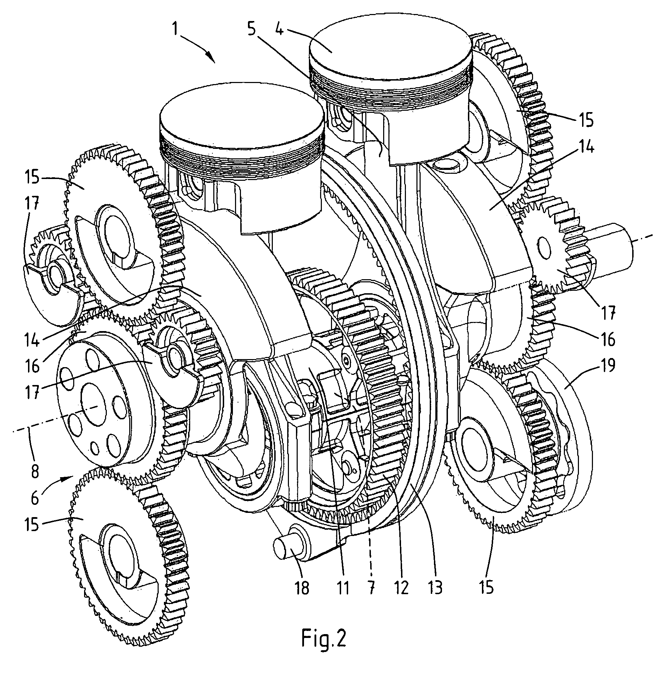

Fig. 2 shows the embodiment of Fig. 1 in a condition in which the pistons 4 are in bottom dead centre. It can be seen that the first order gears 15 are also rotated to a position in which the centres of gravity thereof are directed upwardly.

Furthermore, Fig. 2 shows a pin 18 to which an actuator can be coupled in order to move the internal ring gear 13 with respect to the crankcase 2.

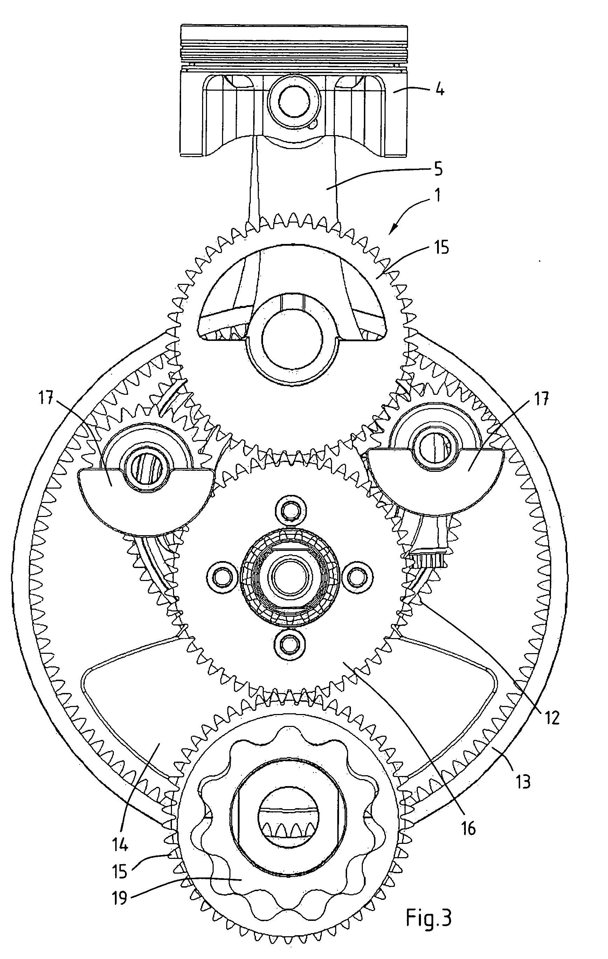

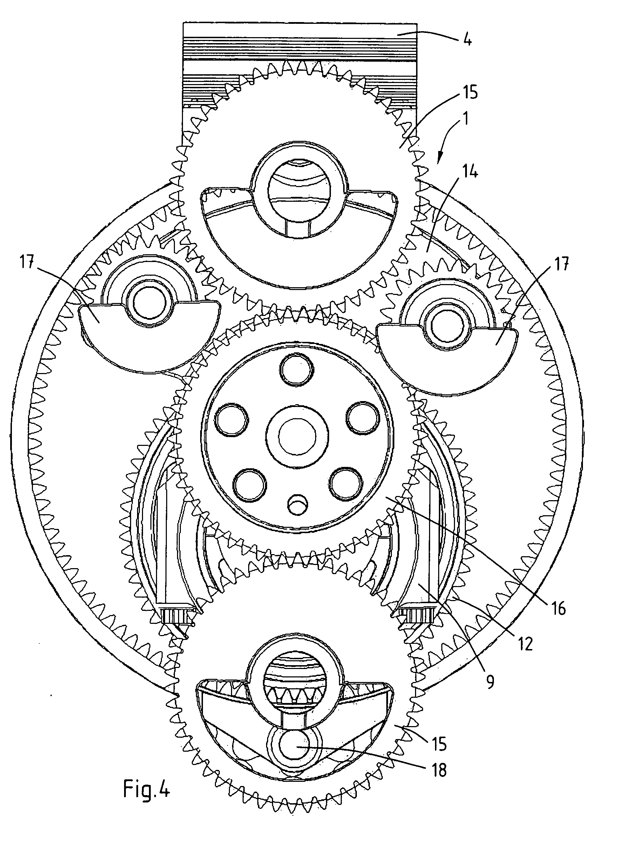

Fig. 3 and 4 show rear and frontal views of the machine 1 when the pistons 4 our in top dead centre and bottom dead centre, respectively.

It is noted that the application of first order gear wheels 15 and second order gear wheels 17 have great advantage over applying balancing shafts, particularly in the embodiment shown in Fig. 1-4. If balancing shafts would be applied these should be located at least outside the circumference of the internal ring gear 13. In conventional engines having no crank member 11, gear 12 and internal ring gear 13, particularly the lower first order gears 15 below the central gear 16 would not be preferred since these gears 15 would increase the construction height of the machine 1. However, in the embodiment shown in Fig. 1-4 the construction height is mainly determined by the size of the internal ring gear 13, see Fig. 3 and 4.

The first order gears 15 can also be used for driving auxiliary means, such as an oil pump 19 for example, see Fig. 2 and 3.

It may be clear that, although the embodiment of Figs. 1-4 has a crankshaft 3 including one crankpin 7 and two pistons per crankpin 7, the balancing system 6 may also function when only one piston 4 would be connected to the crankpin 7.

Fig. 5 shows a four-stroke, four-cylinder, in-line internal combustion engine including an alternative embodiment of the reciprocating piston machine 1 according to the invention. In this embodiment the crankshaft 3 comprises two crankpins 7 which are disposed at opposite sides of the crankshaft axis 8. This means that both crankpins 7 are rotated 180 degrees with respect to each other about the crankshaft axis 8. The embodiment includes two pairs of pistons 4, of which each pair is connected to one of the crankpins 7 via the connecting rods 5 and the two crank members 11 in this case.

It may be clear that instead of two pairs of pistons 4 the machine may be provided with two pistons 4, each connected with one crankpin 7. However, a four-stroke, two-cylinder, in-line engine will preferably not have a crankshaft 3 like in this embodiment in practice, because in that case the ignition sequence will not be at regular intervals of 360 degrees crank angle.

In the embodiment of the machine 1 such as shown in Fig. 5 the reciprocating forces of the first order related to the first pair of pistons 4 compensate those forces related to the second pair of pistons 4 since the crankpins 7 are disposed at opposite sides of the crankshaft axis 8. However, the reciprocating forces directed in opposite direction of each other along the direction of movement of the pistons 4 act on the crankshaft 3 at locations spaced in axial direction of the crankshaft axis 8. This means that these forces result in a varying torque about a virtual line through the crankshaft axis and extending perpendicular to the crankshaft axis 8 and perpendicular to the direction of movement of the pistons 4. This torque is compensated by the balancing system 6 of the embodiment such as shown in Fig. 5.

In the balancing system 6 the counterweights 14 at both sides of each of the crankpins 7 compensate the reciprocating forces of the first order related to the pair of pistons 4 connected to that crankpin 7 by substantially 50%, similar to the above-mentioned case of the embodiment of a two-cylinder machine 1. As a consequence, two resultant forces each amounting about 50% of the maximum of the reciprocating forces of a pair of pistons 4 act on the crankshaft 3 at the crankpins 7 and rotate in opposite direction of the crankshaft 3 about the crankshaft axis 8, whereas both resultant forces act in opposite direction with respect to each other.

As a consequence of this configuration, a resultant torque about the above-mentioned virtual line through the crankshaft axis occurs. However, due to the 50% compensation of the counterweights 14 the virtual line extends substantially perpendicular to a plane through the crankshaft axis 8 and center lines of the crankpins 7, and rotates about the crankshaft axis 8 at the same speed as the crankshaft 3 but in opposite direction thereof. The value of the resultant torque is substantially constant.

Furthermore, the balancing system 6 of the embodiment of Fig. 5 comprises two first order gears 15, each of them positioned nearby an end portion of the crankshaft 3 in axial direction thereof. The centres of gravity of the first order gears 15 are orientated such that the resultant force of each of the first order gears 15 is directed from bottom dead centre to top dead centre when the adjacent pair of pistons 4 are in bottom dead centre, and from top dead centre to bottom dead centre when the adjacent pair of pistons 4 are in top dead centre. This means that resultant centrifugal forces of the first order gears 15 generate a torque about the above-mentioned rotating virtual line, which torque is substantially equal to the resultant torque resulting from the reciprocating forces and the counterweights 14, but in opposite direction of the resultant torque. As a result, the reciprocating forces of the first order as well as the torque about the virtual line perpendicular to the crankshaft axis 8 and perpendicular to the direction of movement of the pistons 4 are compensated. The weight of the eccenter gears 15 depend on their distance to the virtual line, because they compensate a torque.

However, Fig. 5 also shows that the axes of rotation of the first order gears 15 do not coincide with the crankshaft axis 8. It is noted that in this case the axes of rotation of the first order gears 15 form the eccenter weight axis. This means that when the pistons 4 are in bottom dead centre or in top dead centre all resultant forces of the counterweights 14 and the first order gears 15 act within a flat plane through the direction of movement of the pistons 4 and the crankshaft axis 8. When the pistons 4 are between top dead centre and bottom dead centre the resultant forces have components in a direction perpendicular to the plane through the direction of movement of the pistons 4, wherein the components relating to the counterweights 14 extend through the crankshaft axis 8 and the components related to the first order gears 15 extend through the axes of rotation of the first order gears 15. This means that a varying torque arises about a virtual line extending between the axes of rotation of the first order gears 15 and the crankshaft axis 8 and parallel of the crankshaft axis 8. However, this is not a problem in terms of vibration of the crankcase 2 as long as the crankcase is sufficient rigid.

For balancing the reciprocating forces of the second order the balancing system 6 of the embodiment shown in Fig. 5 comprises four second order gears 17 similar to those in the embodiment of the two-cylinder machine 1 as defined hereinbefore.

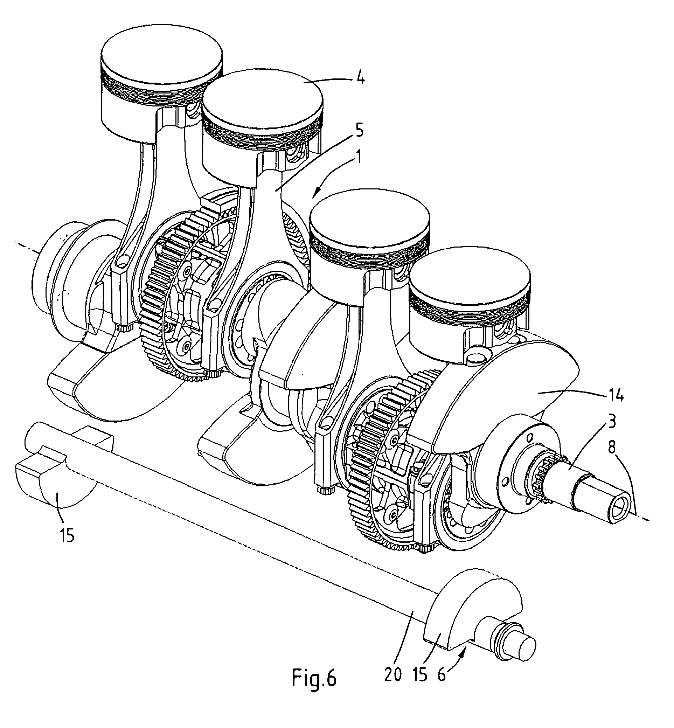

Fig. 6 shows an alternative embodiment of the reciprocating piston machine 1 according to the invention comprising eccenter weights 15 mounted on a balancing shaft 20 which is rotatably connected to the crankcase 2. The eccenter weights 15 are adapted such that the balancing shaft 20 has the same effect as the two first order gears 15 of the four-cylinder engine in the embodiment described above. In Fig. 6 second order balancing means are not shown, but may be present.

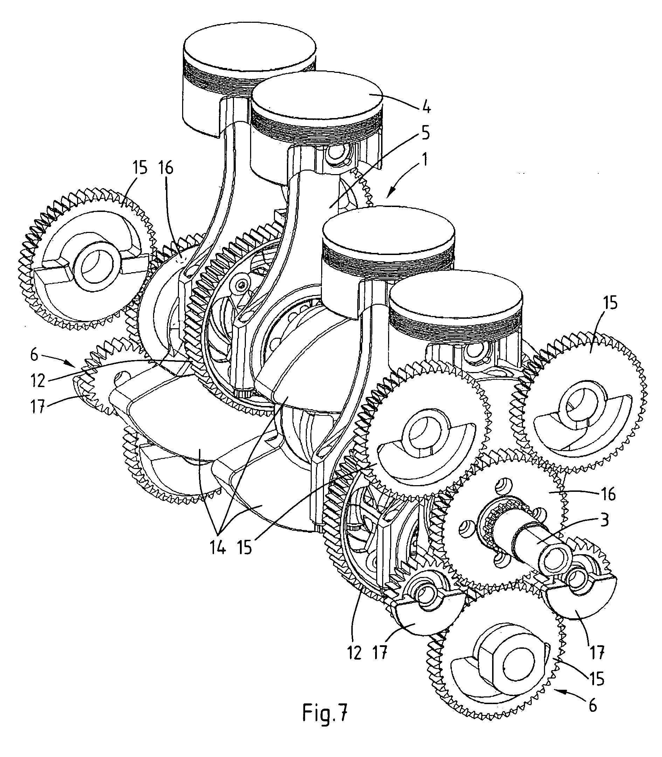

The balancing system 6 of the embodiment of Fig. 7 is provided with three first order gears 15 near each end portion of the crankshaft 3. This configuration has the advantage that the first order gears 15 can be adapted such that the eccenter weight axis, about which the resultant forces associated with the first order gears 15 at both end portions of the crankshaft 3 rotate, coincides with the crankshaft axis 8. In that case the varying torque about a virtual line extending between the axes of rotation of the first order gears 15 and the crankshaft axis 8 and parallel to the crankshaft axis 8 is eliminated.

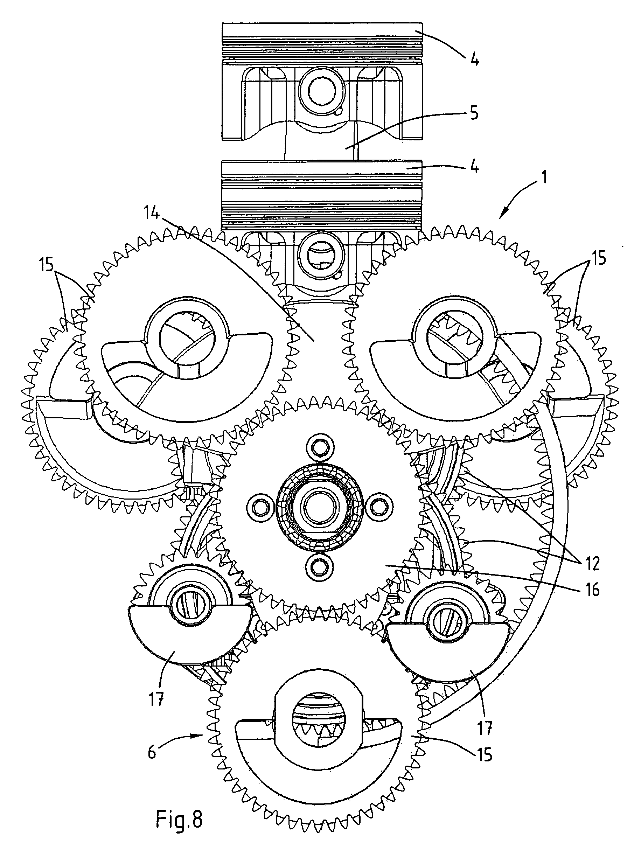

The frontal view of the embodiment of the machine 1 such as shown in Fig. 8 shows that the first order gears 15 at the front side of the machine 1 are not positioned at equiangular distance with respect to each other. This positioning may be desired because of other practical requirements of the machine 1, such as available space at the external side of the crankcase 2. At the rear side of the embodiment the first order gears 15 are positioned equidistantly in circumferential direction about the crankshaft axis 8. This means that at the rear side of the machine 1 the weight of the upper two first order gears 15 may be half of that of the lower first order gear 15. At the front side of the machine 1 the weights of the upper gears 15 and that of the lower gear 15 are selected such that a resultant rotating force will be obtained which compensates the resultant rotating force from the reciprocating forces of the first order and the centrifugal forces of a portion of the counterweights 14 compensating the reciprocating forces by substantially 50%.

From the foregoing, it will be clear that the invention provides a reciprocating piston machine of which the reciprocating forces of the first order are minimized by an eccenter weight of which the weight and centre of gravity is selected such that the resultant centrifugal force of the eccenter weight is substantially equal to that of the counterweight compensating the reciprocating forces by substantially 50%.

The invention is not limited to the embodiments shown in the drawings and described hereinbefore, which may be varied in different manners within the scope of the claims and their technical equivalents. It is, for example, possible that more than two or three gears may be disposed about the crankshaft. It is also possible to drive the first and/or second order gears in another way than via a gear transmission, for example via a flexible belt or chain or the like. The size of the first and second order gears such as shown in the drawings may be different with respect to the size of the machine and are preferably adapted such that the machine has a compact construction. Besides, the principle of balancing reciprocating forces according to the invention is applicable to conventional reciprocating piston machines which are provided with one piston per crankpin. Furthermore, the balancing system which is shown above in the embodiments of four-cylinder engines is also applicable, for example, to conventional two-cylinder two-cycle engines having a crankshaft including two crankpins which are disposed opposite to each other with respect to the crankshaft axis.

## Claims

1. A reciprocating piston machine (1), comprising a crankcase (2); a crankshaft (3) rotatable about a crankshaft axis (8) and connected to the crankcase (2), said crankshaft (3) including at least a crankpin (7); at least a piston (4) which is connected to the crankpin (7) via at least a connecting rod (5); and a balancing system (6) for balancing at least reciprocating forces of the first order which act on the crankshaft (3) in the direction of movement of the piston (4) when the machine (1) is operated, the balancing system (6) comprising at least a counterweight (14) provided on the crankshaft (3), said counterweight (14) being positioned and adapted such that it compensates the reciprocating forces of the first order by substantially 50%, the balancing system (6) further comprising at least a drivable eccenter weight (15) which is rotatably connected to the crankcase (2) and positioned and adapted such that the resultant centrifugal force thereof is directed in a direction opposite to that of the counterweight (14) and is driven at similar speed as the crankshaft (3) albeit in opposite direction around an eccenter weight axis extending parallel to the crankshaft axis (8) when the machine (1) is operated, **characterized in that** the weight and centre of gravity of the eccenter weight (15) is selected such that the resultant centrifugal force of the eccenter weight (15) is substantially equal to that of the counterweight (14) when the machine (1) is operated.

2. A reciprocating piston machine (1) according to claim 1, wherein the eccenter weight axis coincides with the crankshaft axis (8).

3. A reciprocating piston machine (1) according to claim 1 or 2, wherein the balancing system (6) comprises at least two eccenter weights (15) having axes of rotation extending parallel to the crankshaft axis (8), which axes are positioned at angular distance with respect to each other about the crankshaft axis (8), and the weights and centres of gravity of the eccenter weights (15) are selected such that the resultant force of the eccenter weights (15) forms the resultant centrifugal force rotating about the eccenter weight axis.

4. A reciprocating piston machine (1) according to claim 3, wherein at least two eccenter weights (15) are disposed near each end portion of the crankshaft (3) in axial direction thereof.

5. A reciprocating piston machine (1) according to claim 3 or 4, wherein the axes of rotation of the eccenter weights (15) are equidistantly distributed in circumferential direction of the crankshaft axis (8).

6. A reciprocating piston machine (1) according to one of the claims 3 - 5, wherein the eccenter weights are first order gears (15) which mesh with a central gear (16) fixed to the crankshaft (3).

7. A reciprocating piston machine (1) according to one of the preceding claims, wherein the balancing system (6) comprises at least two balancing members (17) for balancing reciprocating forces of the second order, which balancing members (17) are rotatably connected to the crankcase (2) and drivable such that they rotate in opposite direction with respect to each other at twice the crankshaft speed when the machine (1) is operated.

8. A reciprocating piston machine (1) according to claim 7, wherein each balancing member (17) is formed by at least two second order eccenter weights, one disposed near one end portion of the crankshaft (3) and the other one near the opposite end portion thereof.

9. A reciprocating piston machine (1) according to claims 6 and 8, wherein the second order eccenter weights are second order gears (17), of which at least near one end portion of the crankshaft (3) one second order gear (17) meshes with the central gear (16) and the other second order gear (17) meshes with one of the first order gears (15).

10. A reciprocating piston machine (1) according to one of the claims 7 - 9, wherein the balancing members (17) are positioned such that a virtual plane through their axes of rotation is at least substantially perpendicular to the direction of movement of the piston (4).

11. A reciprocating piston machine (1) according to one of the preceding claims, wherein the machine (1) is provided with a crank member (11) which is eccentrically disposed with respect to the crankpin (7) and has an outer circumferential wall which bears a big end (9) of the connecting rod (5) such that the connecting rod (5) is rotatably mounted on the crank member (11) via the big end (9), wherein a gear (12) is mounted to the crank member (11) and an internal ring gear (13) is mounted to the crankcase (2) with which the gear (12) meshes.

12. A reciprocating piston machine (1) according to claim 11, wherein at least two pistons (4) are connected to the crank member (11).

13. A reciprocating piston machine (1) according to one of the preceding claims, wherein the crankshaft (3) comprises at least two crankpins (7) which are disposed at opposite sides of the crankshaft axis (8).

14. A reciprocating piston machine (1) according to claim 1, wherein the crankshaft (3) is provided with at least two crankpins (7) disposed at opposite sides of the crankshaft axis (8), and the balancing system (6) comprises at least two eccenter weights (15), each of them positioned nearby an end portion of the crankshaft (3) in axial direction thereof.

15. A reciprocating piston machine (1) according to claim 14, wherein the eccenter weights (15) are mounted on a shaft (20) which is rotatably connected to the crankcase (2) and has an axis of rotation parallel to the crankshaft axis (8).

16. A reciprocating piston machine (1), comprising a crankcase (2); a crankshaft (3) rotatable about a crankshaft axis (8) and connected to the crankcase (2), said crankshaft (3) including at least two crankpins (7) disposed at opposite sides of the crankshaft axis (8); at least two pistons (4), wherein each of the crankpins (7) is connected to at least one of the pistons via a connecting rod (5); and a balancing system (6) for balancing at least reciprocating forces of the first order which act on the crankshaft (3) in the direction of movement of the piston (4) when the machine (1) is operated, the balancing system (6) comprising at least two counterweights (14) provided on the crankshaft (3) at locations which are spaced from each other in axial direction of the crankshaft (3), said counterweights (14) being positioned and adapted such that they compensate the reciprocating forces of the first order related to each of the pistons by substantially 50%, hence generating a resultant torque about a virtual line through the crankshaft axis (8) which virtual line extends substantially perpendicular to a plane through the crankshaft axis (8) and center lines of the crankpins (7), which virtual line rotates about the crankshaft axis (8) at the same speed as the crankshaft (3) albeit it in opposite direction thereof, the balancing system (6) further comprising at least two drivable eccenter weights (15) which are rotatably connected to the crankcase (2) and spaced from each other in axial direction of the crankshaft (3), and said eccenter weights (15) are driven at similar speed as the crankshaft (3) albeit in opposite direction thereof around corresponding eccenter weight axes extending parallel to the crankshaft axis (8) when the machine (1) is operated, wherein the weights and centres of gravity of the eccenter weights (15) are selected such that resultant centrifugal forces of the eccenter weights (15) generate a torque about said virtual line, which torque is substantially equal to said resultant torque albeit in opposite direction thereof when the machine (1) is operated.

17. A reciprocating piston machine (1) according to claim 16, wherein the eccenter weight axes coincide with the crankshaft axis (8).

18. A reciprocating piston machine (1) according to claim 16 or 17, wherein the crankshaft (3) has two crankpins (7) and at least one of the eccenter weights (15) is located near one end portion of the crankshaft (3) in axial direction thereof and at least the other one is located near the opposite end portion thereof, and the centers of gravity of said eccenter weights (15) are orientated such that resultant forces thereof are directed from bottom dead center to top dead center when the piston (4) corresponding to the crankpin (7) which is adjacent to the eccenter weight (15) in question is in bottom dead center.

19. An internal combustion engine comprising the reciprocating piston machine (1) according to one of the preceding claims.
